# EUROPÄISCHE PATENTANMELDUNG

(11) **EP 2 942 432 A1**
(43) Veröffentlichungstag der Anmeldung: **11.11.2015**
(21) Anmeldenummer: 15001234.2
(22) Anmeldetag: 25.04.2015
(51) Int. Cl.: D06F 93/00, D06F 67/04, D06F 95/00, F16B 2/18

(54) **KLAMMER FÜR EIN WÄSCHESTÜCK**

(30) Priorität: 09.05.2014 DE 102014006697
(71) Anmelder: Herbert Kannegiesser GmbH, 32602 Vlotho (DE)
(72) Erfinder: Sielermann, Jürgen, 73540 Heubach (DE); Herzog, Lars, 33602 Bielefeld (DE); Heinz, Engelbert, 32602 Vlotho (DE)
(74) Vertreter: Möller, Friedrich

(57) **Zusammenfassung**

Klammern dienen beispielsweise dem Zuführen von Wäschestücken zu einer Wäschebehandlungsmaschine. Es sind Vorrichtungen bekannt, bei denen das Zuführen der Wäschestücke von einem Wäschebehälter, Trockner oder dergleichen zu einer Mangeleingabemaschine weitgehend bzw. vollständig mechanisiert und automatisiert mittels Klammern erfolgt. Es hat sich jedoch gezeigt, dass bei einer derartigen Vorrichtung die Handhabung der Klammern verhältnismäßig aufwendig und daher zeitraubend ist. Der Erfindung liegt daher die Aufgabe zugrunde, eine Klammer (18) zu schaffen, die sich einfach betätigen lässt und zur Steigerung der Leistung sowie Zuverlässigkeit bei der Zufuhr von Wäschestücken (10) zu beispielsweise einer Mangel oder dergleichen dient. Dazu ist mindestens ein Klemmorgan der Klammer (18) als Klemmhebel (37, 38) mit einer ein Leitmittel aufweisenden Einführhilfe zum geleitenden Einführen eines Teils(24) des Wäschestücks (10) in ein Klammermaul (32) ausgebildet.

## Beschreibung

Die Erfindung betrifft eine Klammer für ein Wäschestück gemäß dem Oberbegriff des Anspruchs 1.

Klammern dieser Art finden in Wäschereien, beispielsweise bei Vorrichtungen zum Zuführen von insbesondere großen Wäschestücken (Betttücher, Tischdecken etc.) zu einer Mangel oder einer anderen Wäschebehandlungsmaschine, aber auch Transportsystemen, Speicher- und Sortierstrecken von Wäschereien Verwendung.

Es hat sich gezeigt, dass bei bekannten Klammern dieser Art die Handhabung, vor allem das manuell erfolgende Einführen eines Teils des Wäschestücks in ein Klammermaul der Klammer, verhältnismäßig aufwendig und daher zeitraubend ist.

Der Erfindung liegt daher die Aufgabe zugrunde, eine Klammer der eingangs beschriebenen Art derart weiterzubilden, dass sie sich einfach beschicken lässt.

Zur Lösung dieser Aufgabe weist die erfindungsgemäße Klammer die Merkmale des Anspruchs 1 auf. Klammern dieser Art weisen ein Klammergehäuse mit einem Klammermaul, in das ein Teil eines Wäschestücks gehalten werden kann, und mindestens ein bewegliches Klemmorgan auf. Erfindungsgemäß ist das mindestens eine Klemmorgan als Klemmhebel mit einer ein Leitmittel aufweisenden Einführhilfe zum geleitenden Einführen eines Teils des Wäschestücks in das Klammermaul ausgebildet. Die Einführhilfe des Klemmhebels dient dazu, die Eingabe des Wäschestücks bzw. eines Teils des Wäschestücks zu erleichtern. Die Bedienperson muss das Teil des Wäschestücks nicht mehr genau in eine Öffnung des Klammermauls führen, sondern braucht das Teil des Wäschestücks vielmehr nur noch an dem Leitmittel entlangzuführen. Sobald die Bedienungsperson ein Teil des Wäschestücks, beispielsweise eine Ecke, einen Rand oder dergleichen, mit dem Leitmittel in Kontakt gebracht hat, braucht sie das Wäschestück nur am Leitmittel entlangzubewegen, wobei der betreffende Teil des Wäschestücks sozusagen zwangläufig in das Klammermaul der Klammer gelangt. Bevorzugt ist das Klammermaul nach unten hin geöffnet, kann jedoch auch jede andere Orientierung einnehmen.

Eine weitere vorteilhafte Ausgestaltung der Erfindung kann darin bestehen, dass das Leitmittel der Einführhilfe als eine schräg unterhalb des Klammergehäuses zum Klammermaul hin ansteigende Führungsbahn ausgebildet ist, die sich vorzugsweise bis in das Klammermaul hinein erstreckt. Infolge der Führungsbahn wird vom Leitmittel das Wäschestück direkt in das Klammermaul hinein geführt bzw. geleitet. Es ist allerdings auch denkbar, dass das Leitmittel nur zum Klammermaul hinführt und sich nicht in dieses hinein erstreckt, sondern vielmehr vor diesem endet. In beiden Fällen wird sichergestellt, dass das Teil des Wäschestücks, welches von der Bedienperson aufgenommen wurde, direkt in das Klammermaul gelangt.

Insbesondere ist es bei der vorliegenden Erfindung denkbar, dass die Führungsbahn auf ihrer ganzen Länge unter einer Öffnung des Klammermauls liegt. Vorzugsweise verläuft die Führungsbahn schräg unter dem Klammermaul bzw. Klammergehäuse. Dabei verringert sich der Abstand der Führungsbahn zum Klammermaul hin kontinuierlich. Die Führungsbahn des Leitmittels erstreckt sich dabei in ihrer Länge über die Abmessungen des Klammergehäuses. Somit wird die Aufnahmefläche, an die das Teil des Wäschestücks von der Bedienperson angeführt wird, vergrößert. Dadurch, dass sich der Abstand der Führungsbahn zum Klammermaul hin kontinuierlich verringert und das Teil des Wäschestücks somit in Richtung Klammermaul geleitet wird, benötigt die Bedienperson für das Zuführen nur wenig Geschick und Konzentration bzw. reicht es für das Zuführen, wenn das Teil des Wäschestücks nur ungefähr in die Richtung des Klammermauls bewegt wird. Ausschlaggebend ist, dass die Führungsbahn des Klemmhebels getroffen wird.

Als besonders vorteilhaft ist es weiter anzusehen, dass die schräg ansteigende Führungsbahn geradlinig bzw. leicht konvex oder konkav, vorzugsweise kufenartig, ausgebildet ist. Die Führungsbahn hat dadurch einen stetigen Verlauf. Die Führungsbahn des Leitmittels kann jedoch auch als ein schmales oder breitflächiges Blech ausgebildet sein. Außerdem ist es denkbar, dass die Führungsbahn rohrartig ausgebildet ist. Für einen möglichst geringen Gleitwiderstand ist die Führungsbahn glatt, insbesondere metallisch oder aus Kunststoff, ausgebildet. Die Oberfläche der Führungsbahn kann außerdem mit einem Kunststoff, insbesondere Teflon, beschichtet sein.

Des Weiteren ist es erfindungsgemäß vorgesehen, dass ein erstes Ende des Klemmhebels in das Klammermaul hineinragt oder kurz vorher endet und ein zweites Ende über das Klammergehäuse herausragt, wobei sich zwischen den beiden Enden des Klemmhebels an der Unterseite desselben die Führungsbahn erstreckt. Das dem Klammermaul zugewandte erste Ende des Klemmhebels kann zusätzlich einen hakenartigen oder nasenartigen Vorsprung aufweisen. Das Teil des Wäschestücks, das entlang der Führungsbahn in Richtung Klammermaul geleitet wird, stößt in diesem Vorsprung auf einen Widerstand. Durch diesen Widerstand wird eine Kraft bzw. ein Drehmoment auf den Klemmhebel ausgeübt, so dass er sich bewegt und das Klammermaul bzw. die Öffnung des Klammermauls freigibt. Dadurch, dass die Öffnung des Klammermauls durch den Klemmhebel freigegeben wird, kann das Teil des Wäschestücks in die Öffnung des Klammermauls gelangen. Bei diesem hakenartigen Vorsprung kann es sich auch um einen Bereich der Führungsbahn mit unterschiedlichem Gleitwiderstand handeln.

Das dem Klammermaul abgewandte zweite Ende des Klemmhebels ist derart ausgebildet, dass es über das Klammergehäuse herausragt. Durch die Ausübung einer Kraft bzw. eines Drehmoments auf die Oberseite des zweiten Endes des Klemmhebels kann die Öffnung des Klammermauls ebenfalls freigegeben werden.

Weiter besteht eine besondere möglich Ausgestaltung der vorliegenden Erfindung darin, dass der Klemmhebel um eine Schwenkachse schwenkbar am Klammergehäuse gelagert ist, vorzugsweise dem Klemmhebel ein Rückstellmittel, insbesondere eine Feder, zugeordnet ist, die den Klemmhebel im das Klammermaul schließenden Sinn vorspannt. In einer Ausgangsstellung wird das erste Ende des Klemmhebels gegen das Klammermaul bzw. gegen einen Steg des Klammermauls durch das Rückstellmittel gespannt. Wird das Teil des Wäschestücks beim Entlanggleiten auf der Führungsbahn gegen den hakenförmigen Vorsprung bewegt, wird dadurch ein Drehmoment auf den Klemmhebel ausgeübt, das den Klemmhebel entgegen der Vorspannung zurückgeschwenkt. Sobald die Bedienperson keine Kraft mehr auf den Klemmhebel ausübt, schwenkt dieser bedingt durch seine Federvorspannung zurück und klemmt den Teil des Wäschestücks zwischen dem ersten Ende des Klemmhebels und dem Klammermaul bzw. dem Steg des Klammermauls ein. Dadurch wird das Wäschestück in der Klammer fixiert. Durch die Ausübung einer Kraft auf die Oberseite des zweiten Endes des Klemmhebels kann dieser entgegen seiner Vorspannung verschwenkt werden, so dass der Teil des Wäschestücks wieder freigegeben wird. Bei der Feder kann es sich beispielsweise um eine Schenkelfeder handeln, die zwischen dem Klammergehäuse und dem Klemmhebel gespannt ist. Es ist aber auch denkbar, dass es sich bei dem Rückstellmittel um eine andere mechanische Feder oder um beispielsweise einen Magneten bzw. Elektromagneten handelt.

Weiter kann es erfindungsgemäß vorgesehen sein, dass die Schwenkachse etwa mittig zwischen den Enden des Klemmhebels angeordnet ist, vorzugsweise dichter zum ersten Ende des Klemmhebels bzw. dichter zum zweiten Ende positioniert ist. Dadurch, dass die Schwenkachse dichter zum ersten Ende des Klemmhebels positioniert ist, kann die Hebelwirkung der auf das zweite Ende wirkenden Kraft für das Öffnen des Klammermauls erhöht werden. Andererseits durch Vergrößerung des Abstandes der Schwenkachse zum ersten Ende des Klemmhebels kann die Kraft verringert werden, die die Bedienperson aufbringen muss, um die Vorspannung zu überwinden.

Als besonders vorteilhaft ist es weiter vorgesehen, dass zum Einführen des Teils des Wäschestücks in das Klammermaul das Wäschestück mit diesem Teil am Leitmittel der Einführhilfe, insbesondere der diese bildenden Führungsbahn, entlang bewegbar ist, vorzugsweise in einer fließenden Bewegung vom zweiten Ende des Klemmhebels zum ersten Ende des Klemmhebels. Dabei ist die Führungsbahn so ausgebildet, dass das Teil des Wäschestücks beim Bewegen nicht abgesetzt oder umorientiert werden muss. Bei dem Teil des Wäschestücks kann es sich beispielsweise um ein Randstück handeln, dass einhändig oder beidhändig von der Bedienperson erfasst wird und der Klammer zugeführt wird.

Außerdem kann es erfindungsgemäß vorgesehen sein, dass der Klemmhebel zum Einführen des Wäschestücks in das Klammermaul während des Entlangleitens des Wäschestückteils am Leitmittel bzw. seiner Führungsbahn entgegen der Vorspannung des Rückstellmittels, vorzugsweise der Feder, bewegbar ist. Dadurch, dass der Klemmhebel bereits während der gesamten Bewegung des Wäschestückteils auf der Führungsbahn schwenkbar ist, kann sich das Klammermaul bereits in einem geöffneten Zustand befinden, wenn das Wäschestückteil das erste Ende des Klemmhebels erreicht.

Insbesondere ist es bevorzugt vorgesehen, dass das Teil des Wäschestücks vom ersten Ende des Klemmhebels durch die Federvorspannung des Klemmhebels im Klammermaul fixierbar ist. Durch diese Fixierung des Wäschestücks kann dieses über ein Transportsystem beliebigen weiteren Behandlungsstationen zugeführt werden. Bei der Behandlungsstation kann es sich allerdings auch um Sammelbehälter bzw. Sortierbehälter handeln.

Eine besondere Ausgestaltung der vorliegenden Erfindung kann darin bestehen, dass dem Klammergehäuse mehrere, vorzugsweise zwei, Klemmhebel und/oder Klammermäuler zugeordnet sind, die vorzugsweise gemeinschaftlich betätigbar sind. Die Klemmhebel sind dabei parallel ausgebildet und können gleichermaßen durch Ausübung eines Drehmoments geöffnet und geschlossen werden. Durch mehrere Klemmhebel kann entweder ein größerer Abschnitt eines Wäschestücks aufgenommen werden oder mehrere einzelne Wäschestücke gleichzeitig aufgenommen werden. Dabei ist es außerdem vorgesehen, dass die Klemmhebel sowohl individuell einzeln mit Wäschestücken versehen werden können oder sich gemeinschaftlich zur Aufnahme eines Wäschestücks betätigen lassen.

Weiter ist es erfindungsgemäß vorgesehen, dass Klemmhebel beabstandet zueinander an einem gemeinsamen Klammergehäuse angeordnet sind und vorzugsweise jedem Klemmhebel ein jeweils eigener Klammermaulsteg zugeordnet ist. Ein derartiger Klammermaulsteg ist Teil des Klammermauls und dient dem Klemmhebel als Gegenstück zum Fixieren des Wäschestücks. Ein derartiger Klammermaulsteg weist eine gleiche Breite auf wie der entsprechende Klemmhebel. Dadurch, dass zwei beabstandete Klemmhebel zwei gleichermaßen beabstandete Klammermaulstege aufweisen, kann bei einer Übergabe des Wäschestücks von einer Klammer in eine folgende Klammer die folgende Klammer zwischen den Klemmhebeln der ersten Klammer bzw. um diese herum das Wäschestück ergreifen.

Es ist erfindungsgemäß vorgesehen, dass eine Beladestation Mittel aufweist, die einem Förderer zugewiesen sind und diese Mittel mehrere Klammern der erfindungsgemäßen Art aufweisen. Ein derartiges Mittel kann beispielsweise gabelförmig ausgebildet sein, wobei an den freien Enden des gabelartigen Mittels jeweils eine Klammer positioniert ist. In jede dieser Klammern kann entweder jeweils ein einzelnes Wäschestück oder in allen Klammern ein gemeinsames Wäschestück eingeführt werden. Durch das Mittel werden die Wäschestücke über das Transportband dann weiteren Bearbeitungsstationen zugeführt.

Weitere Merkmale, Vorteile und Einzelheiten der Erfindung ergeben sich aus der nachfolgenden Beschreibung bevorzugter Ausführungsbeispiele der Erfindung, die hiernach anhand der Zeichnung näher erläutert werden. In dieser zeigen:
- Fig. 1: eine schematisch dargestellte Vorrichtung zum Zuführen von Wäschestücken zu einer Mangel in verkleinertem Maßstab,
- Fig. 2: eine perspektivische Ansicht einer Klammer für ein Wäschestück,
- Fig. 3: eine Seitenansicht der Klammer, und
- Fig. 4: eine Seitenansicht der Klammer.

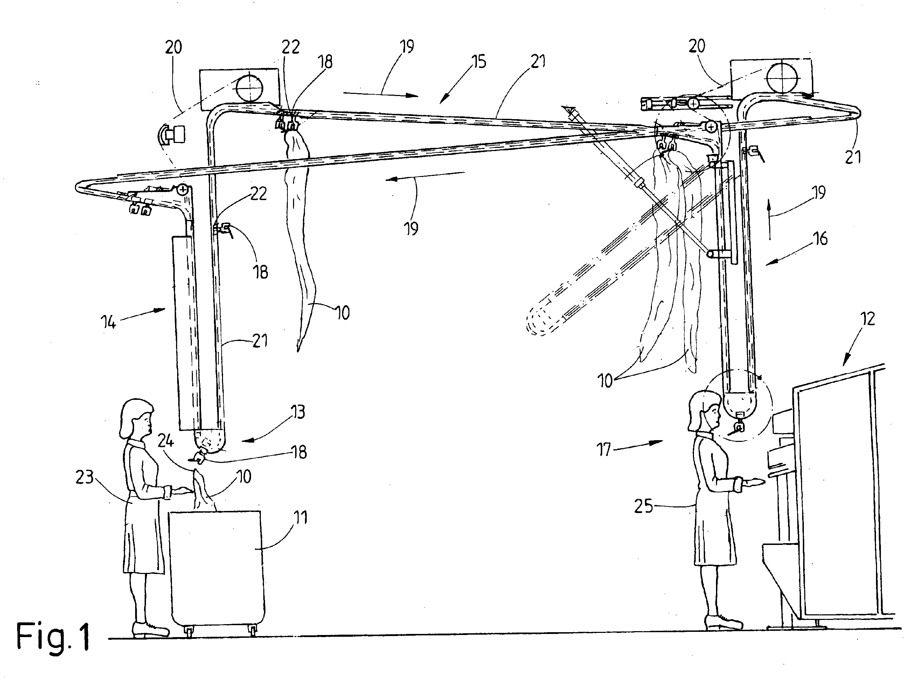

Die in der Fig. 1 dargestellte Vorrichtung zum Zuführen von Wäschestücken 10 von einem Wäschebehälter 11 zu einer Mangeleingabemaschine 12 besteht aus einer Beladestation 13, einer vertikalen Förderstrecke 14 im Bereich der Beladestation 13, einer Schwerkraftförderstrecke 15, einer vertikalen Förderstrecke 16 sowie einer Entnahmestation 17 vor der Mangeleingabemaschine.

Die Zuführung von Wäschestücken 10 erfolgt über Klammern 18, die im Kreislauf gemäß Pfeilrichtung 19 in der Zuführvorrichtung bewegt und geführt werden. Dabei sind die Klammern 18 im Bereich einer jeden vertikalen Förderstrecke 14, 16 mit einem endlosen Förderorgan gekoppelt, das hier als Förderkette 20 ausgebildet ist, die in einer als Profilschiene 21 ausgebildeten Führung läuft.

Die Klammern 18 sind jeweils an einem in der Profilschiene 21 bewegbaren Laufwagen 22 angeordnet. Über die Laufwagen 22 bewegen sich die Klammern 18 in Pfeilrichtung 19 entlang der Förderstrecke 16. Zum Zuführen der Wäschestücke 10 entnimmt eine Bedienperson 23 ein Wäschestück 10 aus dem Wäschebehälter 11 und führt einen Teil 24 des Wäschestücks 10 der Klammer 18 zu. Der Teil 24 des Wäschestücks 10 wird in der Klammer 18 fixiert und entlang der Förderstrecke 16 abtransportiert. An einem anderen Ende der Förderstrecke 16 entnimmt eine weitere Bedienperson 25 das Wäschestück 10 der Klammer 18 und führt es einer weiteren Behandlungsstation, wie beispielsweise einer Mangeleingabemaschine 12, zu. Diese Übergabe an eine weitere Behandlungsstation kann auch automatisch erfolgen.

Die vorliegende Erfindung einer Klammer für ein Wäschestück ist nicht auf das durch Fig. 1 illustrierte Anwendungsbeispiel der erfindungsgemäßen Klammern 18 in einer Zuführvorrichtung eingeschränkt. Vielmehr können die erfindungsgemäßen Klammern 18 an beliebigen Einrichtungen einer Wäscherei zum Einsatz kommen.

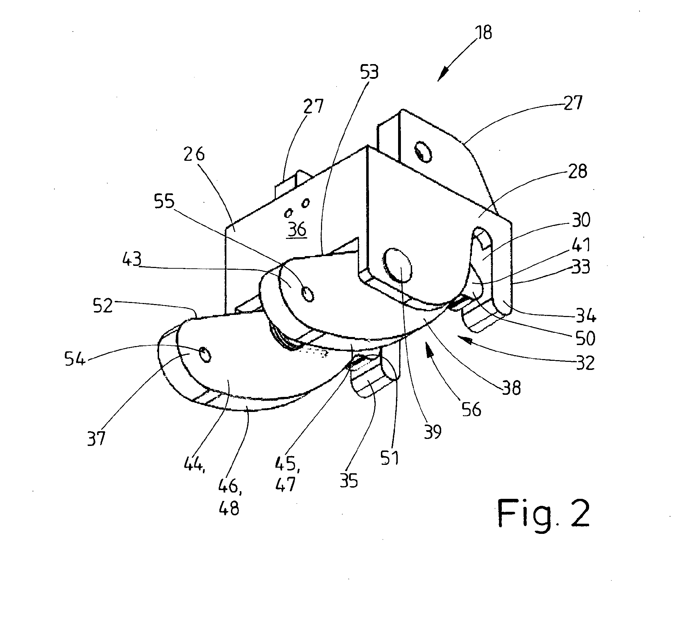

Die Klammer 18 zur Aufnahme eines Wäschestücks 10 weist im Wesentlichen ein Klammergehäuse 26 auf (Fig. 2). Dieses Klammergehäuse 26 besitzt zur Befestigung an beispielsweise einem Laufwagen 22 einer Förderkette 20 Halterungsmittel 27. Das Halterungsmittel 27 ist beispielsweise über nicht dargestellte Befestigungsmittel an den Laufwagen 22 befestigt, vorzugsweise beweglich befestigt. Das Klammergehäuse 26 ist im Wesentlichen kastenförmig ausgebildet, wobei mindestens eine Seite geöffnet ist. Die beiden gegenüberliegenden Seitenwände 28 und 29 weisen jeweils keilförmige oder parabelförmige Einschnitte 30, 31 auf, die gemeinsam ein Klammermaul 32 bilden. Das Klammermaul 32 ist vertikal ausgerichtet und nach unten hin geöffnet. An einer Frontseite 33 der Klammer 18 weist diese eine großflächige Öffnung 56 auf, so dass zusammen mit den Einschnitten 30, 31 zwei Klammermaulstege 34, 35 gebildet werden. Die der Frontseite 33 gegenüberliegende Rückseite 36 der Klammer 18 ist im Wesentlichen geschlossen, kann aber auch Aussparungen für weitere Elemente der Klammer 18 aufweisen.

Dem Klammergehäuse 26 sind bei dem in der Fig. 2 dargestellten Ausführungsbeispiel der Klammer 18 zwei Klemmhebel 37, 38 zugeordnet. Die Klemmhebel 37, 38 sind über eine Schwenkachse 39 miteinander und mit dem Gehäuse 26 verbunden. Die Klemmhebel 37 und 38 können zusammenhängend oder individuell um die Schwenkachse bewegt werden. Des Weiteren sind den Klemmhebeln 37, 38 und dem Klammergehäuse 26 über die Schwenkachse 39 eine gemeinsame Feder 40 bzw. eine Schenkelfeder zugeordnet. Über die Feder 40 wird auf die Klemmhebel 37, 38 eine Vorspannung ausgeübt, so dass die Klemmhebel 37, 38 in einer Ausgangsstellung oder Ruhelage gespannt sind.

Die Klemmhebel 37, 38 weisen eine längliche Form auf, wobei ein erstes Ende 41, 42 in das Klammergehäuse 26 bzw. in das Klammermaul 32 hineinragt und ein zweites Ende 43, 44 aus dem Klammergehäuse 26 herausragt. Zwischen dem ersten Ende 41, 42 und dem zweiten Ende 43, 44 ist die Schwenkachse 39 positioniert. Die Schwenkachse 39 ist mittig zwischen den Enden 41, 42 und 43, 44 angeordnet. Es ist aber erfindungsgemäß auch vorgesehen, dass für eine bessere Hebelwirkung die Schwenkachse 39 zu einem Ende 41, 42 oder 43, 44 näher positioniert ist.

Eine Unterseite 45, 46 der Klemmhebel 37, 38 ist als Leitmittel bzw. Führungsbahn 47, 48 ausgebildet. Diese Führungsbahn 47, 48 der Klemmhebel 37, 38 dient als Einführhilfe für zumindest einen Teil 24 des Wäschestücks 10 in das Klammermaul 32. Dabei kann die Unterseite 45, 46 der Klemmhebel 37, 38 kufenartig ausgebildet sein bzw. einen Grad oder eine flache oder gekrümmte Oberfläche aufweisen.

Die Führungsbahn 47, 48 zwischen dem zweiten Ende 43, 44 und dem ersten Ende 41, 42 ist relativ zum Klammergehäuse 26 bzw. relativ zu einer Horizontalen schräg ausgerichtet, so dass der Abstand zu einer Unterseite 49 des Klammergehäuses 26 in Richtung des ersten Endes 41, 42 stetig abnimmt. Die Führungsbahn 47, 48 ist dabei geradlinig bzw. leicht konvex oder konkav ausgebildet. Vorzugsweise ist es vorgesehen, dass die Führungsbahnen 47, 48 zum ersten Ende 41, 42 mit der Krümmung bzw. der Steigung des Einschnitts 30, 31 bzw. des Klammermauls 32 ähnlich bzw. identisch ist.

Das erste Ende 41, 42 des Klemmhebels 37, 38 weist einen nasenförmigen Vorsprung 50, 51 auf. Mit diesem Vorsprung 50, 51 stößt der Klemmhebel 37, 38 aufgrund der Vorspannung der Feder 40 gegen den Klammermaulsteg 34, 35. Durch Druckausübung auf den Vorsprung 50, 51 wird der Klemmhebel 37, 38 entgegen der Vorspannkraft der Feder 40 um die Schwenkachse 39 derart gedreht, dass das erste Ende 41, 42 des Klemmhebels 37, 38 das Klammermaul 32 freigibt. Sobald auf den Vorsprung 50, 51 des ersten Endes 41, 42 keine Kraft mehr ausgeübt wird, bewegt sich dieses aufgrund der Vorspannung der Feder 40 wieder zurück in die Ausgangslage, in der der Vorsprung 50, 51 in Kontakt mit dem Klammermaulsteg 34, 35 steht.

Das zweite Ende 43, 44 des Klemmhebels 37, 38 weist eine freie Oberseite 52, 53 auf. Durch Kraftausübung auf diese Oberseite 52, 53 kann der Klemmhebel 37, 38 ebenfalls aus der Ruheposition um die Schwenkachse 39 gedreht werden, so dass das Klammermaul 32 freigegeben wird. Eine derartige Kraftausübung auf den Klemmhebel 37, 38 kann händisch bzw. manuell oder automatisch bzw. maschinell erfolgen. Das zweite Ende 43, 44 des Klemmhebels 37, 38 weist eine Öffnung 54, 55 auf, über die mittels eines nicht dargestellten Betätigungselements der Klemmhebel 37, 38 um die Schwenkachse 39 bewegt werden kann.

Die Klemmhebel 37, 38 sind in ihrer Breite so dimensioniert, dass sie mit der Breite der Klammermaulstege 34, 35 korrespondieren. Dadurch entsteht im Klammermaul 32 an der Frontseite 33 des Klammergehäuses 26 die Öffnung 56.

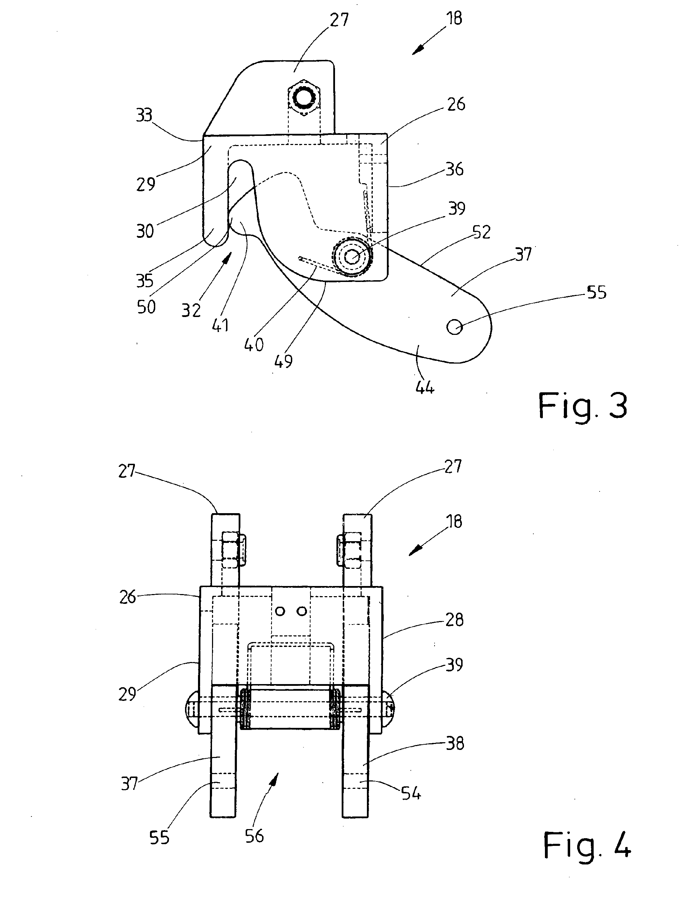

Die Anzahl der Klemmhebel 37, 38 einer Klammer 18 und die Form sind nicht auf das in den Fig. 2 bis 4 dargestellte Ausführungsbeispiel beschränkt. Vielmehr kann es vorgesehen sein, dass die Klammer 18 nur einen Klemmhebel oder eine Vielzahl paralleler Klemmhebel aufweist. Außerdem ist es denkbar, dass der Laufwagen 22 der Förderkette 20 mehrere parallel zueinander ausgerichtete Klammern 18 ausweist. Desweiteren ist es denkbar, dass die Klemmhebel 37, 38 eine andere Form, beispielsweise eher quaderförmige, aufweisen.

Das Klammergehäuse kann aus einem Metall oder einem Kunststoff hergestellt sein. Der Klemmhebel 37, 38, insbesondere die Führungsbahn 47 ,48, sind aus einem Metall oder einem Kunststoff herstellbar. Bevorzugt ist es vorgesehen, dass die Führungsbahn 47, 48 aus einem Material mit einem geringen Gleitwiderstand wie beispielsweise Teflon ausgebildet ist.

Beim Zuführen des Wäschestücks 10 in die Klammer 18 ist die Rückseite 36 der Klammer 18 der Bedienperson 23 zugewandt. Zum Transport eines Wäschestücks 10 durch die Klammer 18 führt eine Bedienperson 23 ein Teil 24, insbesondere eine Ecke, einen Rand oder dergleichen, des Wäschestücks 10 der Klammer 18 zu. Dabei erfasst die Bedienperson 23 den Teil 24 des Wäschestücks 10 und führt ihn an eine beliebige Stelle der Führungsbahn 47, 48. Durch leichte Druckausübung der Bedienperson 23 auf das Teil 24 des Wäschestücks 10, während dies entlang der Führungsbahn 47, 48 geleitet wird, wird das Teil 24 entlang der schräggerichteten Unterseite 45, 46 in Richtung des ersten Endes 41, 42 des Klemmhebels 37, 38 geführt. Dabei ist es unerheblich, an welcher Stelle zwischen dem ersten Ende 41, 42 und dem zweiten Ende 43, 44 des Klemmhebels 37, 38 die Bedienperson 23 das Teil 24 ansetzt. Das Teil 24 wird durch die oben beschriebene Druckausübung der Bedienperson 23 immer entlang der Führungsbahn 47, 48 in Richtung Klammermaul bzw. erstes Ende 41, 42 geleitet. Dadurch, dass die Führungsbahn 47, 48 geradlinig ausgebildet ist, kann das Teil 24 des Wäschestücks 10 in einer fließenden Bewegung dem Klammermaul 32 zugeführt werden.

Wenn das Teil 24 des Wäschestücks 10 gegen den Vorsprung 50, 51 stößt, wird durch leichte Druckausübung durch die Bedienperson 23 die Vorspannung der Feder 40 überwunden und der Klemmhebel 37, 38 schwenkt um die Schwenkachse 39 zurück, so dass das erste Ende 41, 42 das Klammermaul 32 frei gibt. Sobald das Teil 24 des Wäschestücks 10 sich im Klammermaul 32 befindet, lässt die Bedienperson 23 das Teil 24 los. Dadurch, dass keine Kraft mehr auf den Klemmhebel 37, 38 ausgeübt wird, bewegt sich dieses durch die Vorspannung der Feder 40 in ihre Ausgangslage zurück. Der Teil 24 des Wäschestücks 10 wird dabei von dem Vorsprung 50, 51 gegen den Klammermaulsteg 34, 35 gedrückt und so fixiert. Das Wäschestück 10 ist nun derart in der Klammer 18 fixiert, dass es durch ein Fördersystem abtransportiert werden kann.

Zur Entnahme des Wäschestücks 10 aus der Klammer 18 bewegt eine weitere Bedienperson 25 das zweite Ende 43, 44 nach unten, so dass das Klammermaul 32 durch das erste Ende 41, 42 wieder frei gegeben wird und das Teil 24 des Wäschestücks 10 aus dem Klammermaul 32 hinausfällt. Bevorzugt ist es jedoch vorgesehen, dass die Klammer 18 automatisch durch Kraft bzw. Druckausübung auf die Oberseite 52, 53 des zweiten Endes 43, 44 geöffnet wird.

**Bezugszeichenliste:**

| | | | |
|---|---|---|---|
| 10 | Wäschestück | 36 | Rückseite |
| 11 | Wäschebehälter | 37 | Klemmhebel |
| 12 | Mangeleingabemaschine | 38 | Klemmhebel |
| 13 | Beladestation | 39 | Schwenkachse |
| 14 | Förderstrecke | 40 | Feder |
| 15 | Schwerkraftförderstrecke | 41 | erstes Ende |
| 16 | Förderstrecke | 42 | erstes Ende |
| 17 | Entnahmestation | 43 | zweites Ende |
| 18 | Klammer | 44 | zweites Ende |
| 19 | Pfeilrichtung | 45 | Unterseite |
| 20 | Förderkette | 46 | Unterseite |
| 21 | Profilschiene | 47 | Führungsbahn |
| 22 | Laufwagen | 48 | Führungsbahn |
| 23 | Bedienperson | 49 | Unterseite |
| 24 | Teil | 50 | Vorsprung |
| 25 | Bedienperson | 51 | Vorsprung |
| 26 | Klammergehäuse | 52 | Oberseite |
| 27 | Halterungsmittel | 53 | Oberseite |
| 28 | Seitenwand | 54 | Öffnung |
| 29 | Seitenwand | 55 | Öffnung |
| 30 | Einschnitt | 56 | Öffnung |
| 31 | Einschnitt | | |
| 32 | Klammermaul | | |
| 33 | Frontseite | | |
| 34 | Klammermaulsteg | | |
| 35 | Klammermaulsteg | | |

## Patentansprüche

1. Klammer (18) für ein Wäschestück (10) mit einem Klammergehäuse (26), einem Klammermaul (32) und mindestens einem beweglichen Klemmorgan, **dadurch gekennzeichnet, dass** das mindestens eine Klemmorgan als Klemmhebel (37, 38) mit einer ein Leitmittel aufweisenden Einführhilfe zum geleiteten Einführen eines Teils (24) des Wäschestücks (10) in das Klammermaul (32) ausgebildet ist.

2. Klammer (18) nach Anspruch 1, **dadurch gekennzeichnet, dass** das Leitmittel der Einführhilfe als eine schräg unterhalb des Klammergehäuses (26) zum Klammermaul (32) hin ansteigende Führungsbahn (47, 48) ausgebildet ist, die sich vorzugsweise in das Klammermaul (32) hinein erstreckt.

3. Klammer (18) nach Anspruch 1 oder 2, **dadurch gekennzeichnet, dass** die Führungsbahn (47, 48) auf ihrer ganzen Länge unter einer Öffnung des Klammermauls (32) liegt, wobei sich vorzugsweise der Abstand der Führungsbahn (47, 48) zum Klammermaul (32) hin kontinuierlich verringert.

4. Klammer (18) nach einem der vorhergehenden Ansprüche, **dadurch gekennzeichnet, dass** die schräge Führungsbahn (47, 48) geradlinig bzw. leicht konvex oder konkav, vorzugsweise kurvenartig, ausgebildet ist.

5. Klammer (18) nach einem der vorhergehenden Ansprüche, **dadurch gekennzeichnet, dass** ein erstes Ende (41, 42) des Klemmhebels (37, 38) in das Klammermaul (32) hineinragt und ein zweites Ende (43, 44) über das Klammergehäuse (26) herausragt, wobei sich zwischen den beiden Enden (41, 42, 43, 44) des Klemmhebels (37, 38) an der Unterseite (45, 46) desselben die Führungsbahn (47, 48) befindet.

6. Klammer (18) nach einem der vorhergehenden Ansprüche, **dadurch gekennzeichnet, dass** der Klemmhebel (37, 38) um eine Schwenkachse (39) schwenkbar am Klammergehäuse (26) gelagert ist, vorzugsweise dem Klemmhebel (37, 38) ein Rückstellmittel, insbesondere eine Feder (40) zugeordnet ist, die den Klemmhebel (37, 38) im das Klammermaul (32) schließenden Sinn vorspannt.

7. Klammer (18) nach einem der vorhergehenden Ansprüche, **dadurch gekennzeichnet, dass** die Schwenkachse (39) etwa mittig zwischen den Enden (41, 42, 43, 44) des Klemmhebels (37, 38) angeordnet ist, vorzugsweise sich dichter am ersten Ende (41, 42) des Klemmhebels (37, 38) bzw. dichter am zweiten Ende (43, 44) befindet.

8. Klammer (18) nach einem der vorhergehenden Ansprüche, **dadurch gekennzeichnet, dass** zum Einführen des Teils (24) des Wäschestücks (10) in das Klammermaul (32) das Wäschestück (10) mit diesem Teil (24) am Leitmittel der Einführhilfe, insbesondere der diese bildende Führungsbahn (47, 48), entlangbewegbar ist, vorzugsweise in einer fließenden Bewegung vom zweiten Ende (43, 44) des Klemmhebels (37, 38) zum ersten Ende (41, 42) des Klemmhebels (37, 38).

9. Klammer (18) nach einem der vorhergehenden Ansprüche, **dadurch gekennzeichnet, dass** der Klemmhebel (37, 38) zum Einführen des Teils (24) des Wäschestücks (10) in das Klammermaul (32) während des Entlangleitens des Teils (24) des Wäschestücks (10) am Leitmittel bzw. seiner Führungsbahn (47, 48) entgegen der Vorspannung des Rückstellmittels, vorzugsweise der Feder (40), bewegbar ist.

10. Klammer (18) nach einem der vorhergehenden Ansprüche, **dadurch gekennzeichnet, dass** das Teil (24) des Wäschestücks (10) vom ersten Ende (41, 42) des Klemmhebels (37, 38) durch die Federvorspannung des Klemmhebels (37, 38) im Klammermaul (32) fixierbar ist.

11. Klammer (18) nach einem der vorhergehenden Ansprüche, **dadurch gekennzeichnet, dass** dem Klammergehäuse (26) mehrere, vorzugsweise zwei, Klemmhebel (37, 38) und/oder Klammermäuler (32) zugeordnet sind, die vorzugsweise gemeinschaftlich betätigbar sind.

12. Klammer (18) nach einem der vorhergehenden Ansprüche, **dadurch gekennzeichnet, dass** die Klemmhebel (37, 38) beabstandet zueinander an einem gemeinsamen Klammergehäuse (26) gelagert sind und vorzugsweise jedem Klemmhebel (37, 38) jeweils ein eigener Klammermaulsteg (34, 35) zugeordnet ist.
